# EUROPÄISCHE PATENTSCHRIFT

(11) **EP 1 526 035 B1**
(45) Veröffentlichungstag und Bekanntmachung des Hinweises auf die Patenterteilung: **09.12.2009**
(21) Anmeldenummer: 04015007.0
(22) Anmeldetag: 25.06.2004
(51) Int. Cl.: B60N 2/30, B60N 2/36

(54) **Fahrzeugsitz**
Vehicle seat
Siège de véhicule

(30) Priorität: 25.10.2003 DE 10349911
(43) Veröffentlichungstag der Anmeldung: 27.04.2005
(73) Patentinhaber: Dr. Ing. h.c. F. Porsche Aktiengesellschaft, 70435 Stuttgart (DE)
(72) Erfinder: Padberg, Klaus, 70180 Stuttgart (DE); Lewetzky, Frank, 75031 Eppingen (DE); Ossang, Carsten, 76275 Ettlingen (DE)

(56) Entgegenhaltungen:
- DE-A1- 10 055 205
- FR-A- 2 804 072

## Beschreibung

Die Erfindung bezieht sich auf einen Fahrzeugsitz.

Aus der DE 101 23 776 A1 ist ein Fahrzeugsitz mit einer Klappkinematik bekannt, wobei der Sitz ein Sitzteil und ein auf dieses abklappbares Rückenlehnenteil umfasst und das Sitzteil beim Überführen von der Gebrauchslage des Sitzes in dessen zusammengeklappte Nichtgebrauchslage mittels beidseitig des Sitzteiles angeordneten und in der Sitzkonsole gelagerten Gestänge nach vorne und unten klappbar ist. Aus der DE 100 55 205 A1 ist ein Fahrzeugsitz bekannt, welcher den nächstliegenden Stand der Technik darstellt und welcher ein Sitzteil und eine verschwenkbare Sitzlehne umfasst und die Sitzlehne von einer aufrechten Sitzstellung in eine abgelegte Ablagestellung auf die Oberseite des Sitzteils verstellbar ist, wobei zwischen der Rückenlehne und dem Sitzteil mindestens eine Stelleinrichtung angeordnet ist, die einen mit der Rückenlehne verbundenen ersten Stellhebel umfasst, der gelenkig mit einem zweiten Stellhebel verbunden ist, welcher über eine Verstellrichtung in Eingriff mit dem Sitzteil steht. Des Weiteren ist aus der FR-A-2 804 072 ein Fahrzeugsitz bekannt, der eine gekoppelte Stelleinrichtung mit einer Verstelleinrichtung an der Sitzlehne und am Sitzteil aufweist, wobei die Stelleinrichtung an der Sitzlehne einen mit der Verstelleinrichtung des Sitzteils mittels eines Steuerhebels verbundenen Winkelhebel umfasst. Über einen mit dem Steuerhebel verbundenen Zwischenhebel, der mit einer Kulissenbahn des Sitzteils in Eingriff steht, wird bei Klappung der Sitzlehne nach vorne eine Zurückverlagerung des Sitzteils entgegen der Fahrtrichtung nach hinten erreicht.

Die Aufgabe der Erfindung besteht darin, einen verbesserten Fahrzeugsitz der genannten Art zu schaffen, welcher in einfacher Handhabungsweise von einer Sitzstellung in eine abgeklappte Ablagestellung verstellbar ist und wobei in dieser Ablagestellung eine zusätzliche Ladefläche im Fahrzeug erzielbar ist.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten Vorteile bestehen darin, dass durch eine Klappung der Sitzlehne auf das Sitzteil einer Fondsitzbankanlage in einfacher Weise auf der Rückseite der Sitzlehne eine zusätzliche Ladefläche entsteht, die etwa niveaugleich mit der übrigen Ladefläche des Fahrzeugs ausgeführt ist. Dies wird erreicht, indem zwischen der Sitzlehne und dem Sitzteil mindestens eine Stelleinrichtung angeordnet ist, die einen mit der Sitzlehne verbundenen ersten Stellhebel umfasst, der gelenkig mit einem zweiten Stellhebel verbunden ist, welcher über eine Verstelleinrichtung in Eingriff mit dem Sitzteil steht.

Damit eine Verstellung des Sitzteils in Richtung Fahrtrichtung des Fahrzeugs bei einer Klappung der Rücksitzlehne erfolgen kann, ist nach der Erfindung des Weiteren vorgesehen, dass der zweite Stellhebel zwei Hebelarme umfasst und der Stellhebel ortsfest in einem Schwenklager gehalten ist und an seinem einen freien Ende ein Gleitstück der Verstelleinrichtung und an seinem abgekehrten weiteren freien Ende ein Verbindungsgelenk zum ersten Stellhebel vorgesehen ist. Ferner ist vorgesehen, dass das Sitzteil als Verstelleinrichtung unterseitig eine Führungskulisse aufweist, in welcher das Gleitstück des zweiten Stellhebels der Verstelleinrichtung verschiebbar angeordnet wird, derart, dass das Sitzteil in der Ablagestellung eine vorgeschobene Position einnehmen kann. Statt der Kulisse kann nach der Erfindung der zweite Stellhebel auch mit einem Mitnahmeelement verbunden sein, das in eine entsprechende Führungsschiene eingreift.

Zur Erzielung einer Verschiebebewegung des Sitzteils in Fahrtrichtung ist der erste Stellhebel mit der Sitzlehne in einem Abstand unterhalb der Schwenkachse mit der Sitzlehne verbunden derart, dass mit dem ersten Stellhebel eine Zugbewegung entgegen der Fahrtrichtung durchgeführt wird und das Gleitstück am verbundenen zweiten Stellhebel eine Druckbewegung in Fahrtrichtung bewirkt. Vorzugsweise ist mindestens eine Stelleinrichtung zwischen der Sitzlehne und dem Sitzteil angeordnet, wobei der erste Stellhebel sich in Längsrichtung des Fahrzeugs und der zweite Stellhebel sich in Querrichtung des Fahrzeugs in der Sitzstellung erstreckt. Hierdurch wird eine einfache, wenig Raum beanspruchende Stelleinrichtung und eine Verstelleinrichtung geschaffen, welche wenige Bauteile umfasst und auch einfach zu montieren ist.

Das Sitzteil ist über Rollen oder Gleitmittel in ortsfesten Führungsschienen verstellbar angeordnet und an der Vorderseite bzw. im vorderen Bereich des Sitzteils - in Bezug auf die Fahrtrichtung gesehen - sind unterseitig des Sitzteiles Schwenkhebel angeordnet, welche das Sitzteil beim Vorschieben soweit absenken, dass sich eine annähernd ebene zusätzliche Ladefläche zu der vorhandenen Ladefläche des Fahrzeugs ergibt.

Diese Schwenkhebel sind nach der Erfindung beabstandet über eine Querstange miteinander verbunden und mit einem Ende jeweils am Sitzuntergestell oder am Fahrzeugaufbau um eine Achse schwenkbar angelenkt und die abgekehrten hochstehenden freien Enden der Schwenkhebel sind am Sitzteil gehalten. Hierdurch wird erreicht, dass bei einer Klappung der Sitzlehne in Fahrtrichtung sich das Sitzteil beim Vorverschieben kontinuierlich absenken kann.

Zur Erzielung eines vereinfachten Zurückschiebens in die Sitzstellung ist ein Federelement angreifend am Schwenkhebel oder in der Schwenkachse der Lehne vorgesehen, das gemäß der Erfindung an mindestens einem der Schwenkhebel angeordnet ist und welches eine Federvorspannung entgegen der Absenkstellung des Sitzteiles aufweist.

Zur Klappung der in Sitzstellung arretierten Sitzlehne wird ein Entriegelungsgriff der Rückenlehne betätigt und über diesen vorgeklappt, so dass nach der Erfindung die Rückenlehne über den Entriegelungsgriff um die Schwenkachse bei Verstellbewegungen des ersten und zweiten Stellhebels der Stelleinrichtung in die Ablagestellung auf das Sitzteil verschwenkbar ist, wobei über den zweiten Stellhebel das Sitzteil in Fahrtrichtung verschiebbar und in die abgesenkte Ablagestellung mittels des Schwenkhebels verstellbar ist. Aufgrund dieser Klappung der Sitzlehne wird über die Stellhebel eine Folgebewegung des Sitzteiles ausgelöst, was auch bei einem Zurückklappen der Rückenlehne der Fall ist.

Ein Ausführungsbeispiel der Erfindung ist in den Zeichnungen dargestellt und wird im Folgenden näher beschrieben.

### Es zeigen

- Fig. 1: eine Prinzipdarstellung eines Fahrzeugsitzes mit schematisch dargestellter Stelleinrichtung und Verstelleinrichtung bei einem Fahrzeugsitz in aufrechter Sitzstellung,
- Fig. 2: eine Prinzipdarstellung eines Fahrzeugsitzes mit schematisch dargestellter Stelleinrichtung und Verstelleinrichtung bei einem Fahrzeugsitz in abgeklappter Ablagestellung,
- Fig. 3: eine Seitenansicht auf einen Fahrzeugsitz mit schematisch dargestellter Verstelleinrichtung in aufrechter Sitzstellung,
- Fig. 4: eine Seitenansicht auf einen Fahrzeugsitz mit schematisch dargestellter Verstelleinrichtung in abgeklappter Ablagestellung,
- Fig. 5: eine schaubildliche Darstellung auf die Stelleinrichtung mit teilweiser dargestellter Verstelleinrichtung,
- Fig. 6: eine schematische Darstellung auf die Schwenkhebel des Sitzteiles und
- Fig. 7: eine schaubildliche Darstellung auf das Federelement am Schwenkhebel.

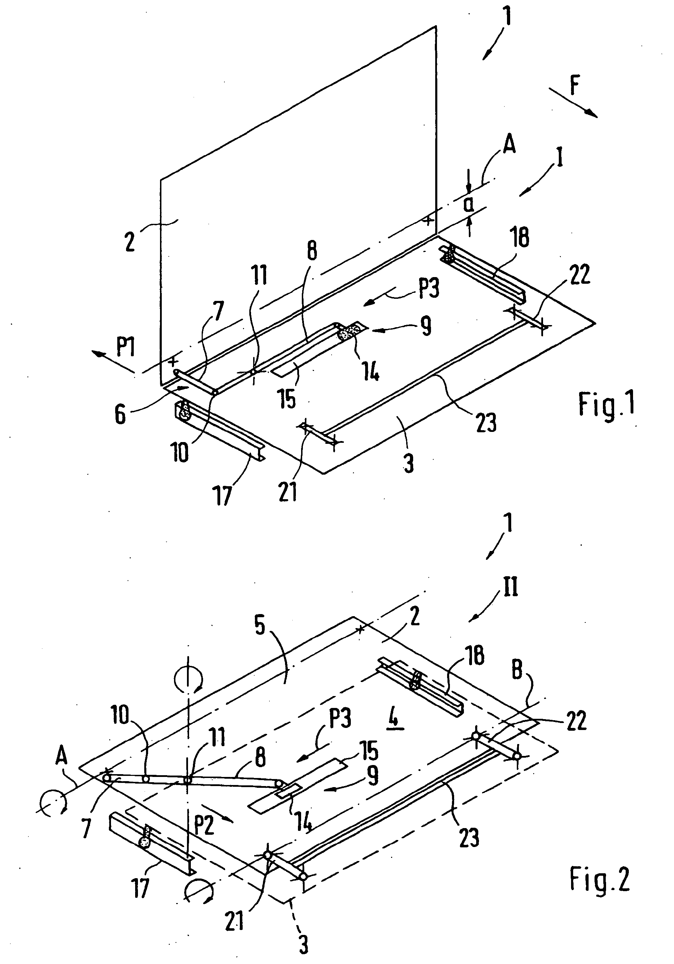

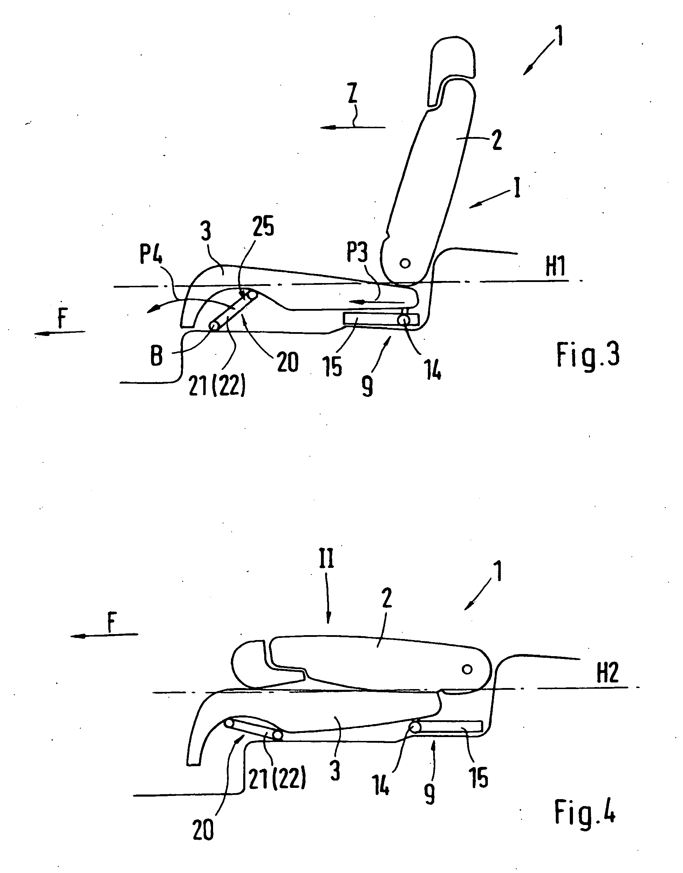

Der Rücksitz 1 eines Kraftfahrzeugs umfasst im Wesentlichen eine fahrzeugseitig um eine Schwenkachse A angelenkte Rücksitzlehne 2 sowie ein zu diesem korrespondierenden Sitzteil 3. Zur Erzielung einer durchgehenden Ladefläche kann die Sitzlehne 2 auf das Sitzteil 3 geklappt werden, so dass die rückseitige Fläche 4 der Sitzlehne 2 ein Teil einer Ladefläche 5 des Fahrzeugs bildet. Wie in den Fig. 1 bis 4 näher dargestellt, ist der Sitz in den Fig. 1 und 3 in einer Sitzstellung I und in den Fig. 2 und 4 in einer Ablagestellung II gezeigt.

Die Sitzlehne 2 ist über mindestens eine Stelleinrichtung 6 mit dem Sitzteil 3 verbunden, welche einen ersten mit der Sitzlehne 2 verbundenen Stellhebel 7 und eine mit diesem verbundenen zweiten Stellhebel 8 umfasst, der über eine Verstelleinrichtung 9 mit dem Sitzteil 3 in Wirkverbindung steht.

Der erste Stellhebel 7 der Einrichtung 6 ist mittels eines Verbindungsgelenks 10 mit dem zweiten Stellhebel 8 verbunden, der über ein ortsfestes Schwenklager 11 am Fahrzeugaufbau bzw. am Sitzuntergestell 12 verschwenkbar gelagert ist, so dass sich ein Hebelarm H1 und ein zweiter Hebelarm H2 ergibt.

Die Verstelleinrichtung 9 umfasst ein am freien Ende des Hebelarmes H2 des Stellhebels 8 angeordnetes Gleitstück 14, das in einer Führungsbahn 15 oder -kulisse des Sitzteils 3 verschiebbar angeordnet ist. Diese Führungsbahn 15 kann sich in Fahrzeugquerrichtung erstrecken oder auch schräg verlaufend angeordnet sein.

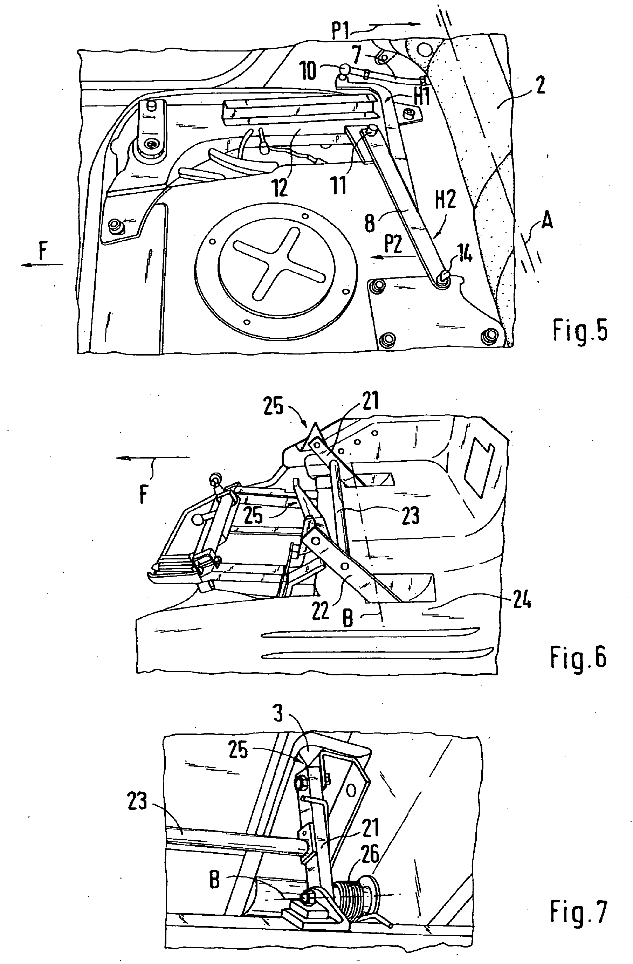

Das Sitzteil 3 ist in ortsfesten und beabstandet zueinander angeordneten Schienen 17, 18 in Fahrzeuglängsrichtung am Fahrzeugboden verschiebbar geführt. Im vorderen Bereich des Sitzteils 3 ist eine Absenkeinrichtung 20 vorgesehen, die aus zwei Schwenkhebeln 21, 22 besteht, welche über eine Querstange 23 miteinander verbunden sind. Die Schwenkhebel 21, 22 sind um die Achse B schwenkbar am Fahrzeugaufbau 24 oder am Sitzuntergestell angelenkt und sind mit ihren abgekehrten freien Enden 25 mit dem Sitzteil 3 verbunden, was in den Figuren 3 und 7 näher dargestellt ist.

Bei einem Vorklappen der Sitzlehne 2 um die Schwenkachse A in Pfeilrichtung Z, was der Fahrtrichtung F entspricht, bewegt sich der erste Stellhebel 7 in Pfeilrichtung P1 und zieht den Hebelarm H1 des Stellhebels 8 mit, wobei der zweite Hebelarm H2 den Stellhebel 8 sich um das Lager 11 in Pfeilrichtung P2 bewegt und das Gleitstück 14 sich in der Führungsbahn 15 der Verstelleinrichtung 9 in Pfeilrichtung P3 bewegt und das Sitzteil 3 sich durch die Druckbewegung des Gleitrückens 14 in Fahrtrichtung F bewegt.

Durch diese zwangsweise gesteuerte Verschiebebewegung des Sitzteiles 3 in Pfeilrichtung P3 werden die Schwenkhebel 21, 22 um die Schwenkachse B unter Mitnahme des Sitzteils 3 in Fahrtrichtung F nach vorne in Pfeilrichtung P4 verschwenkt. Hierdurch kann sich das Sitzteil 3 aus seiner Sitzposition I mit dem Niveau H1 absenken und die Sitzlehne 2 nimmt nach der Klappung die Ablagestellung II mit dem Niveau H2 ein, was in den Fig. 2 und 4 näher dargestellt ist.

Zum vereinfachten Zurückverstellen des Sitzteils 3 nach einem Zurückklappen der Sitzlehne 2 ist ein Federelement 25 an mindestens einem der Schwenkhebel 21 oder in der Schwenkachse der Lehne vorgesehen, das den Schwenkhebel unterstützend in seine Sitzposition I zurückzuschwenken sucht, was in Fig. 7 näher dargestellt ist.

## Patentansprüche

1. Fahrzeugsitz, insbesondere Rücksitz (1) für ein Kraftfahrzeug, welcher ein Sitzteil (3) und eine verschwenkbare Sitzlehne (2) umfasst und die Sitzlehne (2) von einer aufrechten Sitzstellung (I) in eine abgelegte Ablagestellung (II) auf die Oberseite des Sitzteils verstellbar ist und zwischen der Sitzlehne (2) und dem Sitzteil (3) mindestens eine Stelleinrichtung (6) angeordnet ist, die einen mit der Sitzlehne (2) verbundenen ersten Stellhebel (7) umfasst, der gelenkig mit einem zweiten Stellhebel (8) verbunden ist, welcher über eine Verstelleinrichtung (9) in Eingriff mit dem Sitzteil (3) steht,
wobei der zweite Stellhebel (8) zwei Hebelarme (H1 und H2) umfasst, in einem ortsfesten Schwenklager (11) gehalten ist und an seinem einen freien Ende ein Gleitstück (14) der Verstelleinrichtung (9) und an seinem abgekehrten freien Ende ein Verbindungsgelenk (10) zum ersten Stellhebel (7) aufweist,
wobei das Sitzteil (3) als Verstelleinrichtung (9) unterseitig eine sich in Fahrzeugquerrichtung erstreckende Führungskulisse oder -bahn (15) aufweist,
in welcher das Gleitstück (14) des zweiten Stellhebels (8) der Verstelleinrichtung (9) in Querrichtung (P3) verschiebbar angeordnet ist derart, dass das Sitzteil (3) in der Ablagestellung (II) eine vorgeschobene Position einnimmt und wobei der erste Stellhebel (7) mit der Sitzlehne (2) in einem Abstand (a) unterhalb einer Schwenkachse (A) mit der Sitzlehne (2) verbunden ist, derart, dass der erste Stellhebel (7) eine Zugbewegung entgegen der Fahrtrichtung (F) und das Gleitstück (14) am verbundenen zweiten Stellhebel (8) eine Druckbewegung in Fahrtrichtung (F) durchführt.

2. Fahrzeugsitz nach einem der vorhergehenden Ansprüche, **dadurch gekennzeichnet, dass** das Sitzteil (3) einerseits mittels Rollen oder Gleitstücke in ortsfesten Führungsschienen (17, 18) des Fahrzeugaufbaus verstellbar angeordnet ist und andererseits über Schwenkhebel (21, 22) einer Absenkeinrichtung (20) zum Fahrzeugaufbau absenkbar oder anhebbar angelenkt ist.

3. Fahrzeugsitz nach einem der vorhergehenden Ansprüche, **dadurch gekennzeichnet, dass** die Schwenkhebel (21, 22) beabstandet über eine Querstange (23) miteinander verbunden und mit einem Ende jeweils am Sitzuntergestell (24) um eine Schwenkachse (B) verstellbar angelenkt sind und die abgekehrten freien Enden (25) der Schwenkhebel (21, 22) am Sitzteil (3) gehalten sind.

4. Fahrzeugsitz nach Anspruch 1, **dadurch gekennzeichnet, dass** die Sitzlehne (2) über einen Entriegelungsgriff um die Schwenkachse (A) bei Verstellbewegungen des ersten und zweiten Stellhebels (7, 8) der Stelleinrichtung (6) in die Ablagestellung (II) auf das Sitzteil (3) verschwenkbar ist, wobei über den zweiten Stellhebel (8) das Sitzteil (3) in Fahrtrichtung (F) verschiebbar und in die abgesenkte Ablagestellung (II) mittels der Schwenkhebel (21, 22) verstellbar ist.

5. Fahrzeugsitz nach einem der vorhergehenden Ansprüche, **dadurch gekennzeichnet, dass** an mindestens einem Schwenkhebel (21, 22) ein Federelement (26) angeordnet ist, das eine Federvorspannung entgegen der Ablagestellung (II) des Sitzteiles (3) aufweist.

6. Fahrzeugsitz nach einem der vorhergehenden Ansprüche, **dadurch gekennzeichnet, dass** der zweite Stellhebel (8) der Verstelleinrichtung (6) einen mit dem Sitzteil (3) verbundenes Mitnahmeelement aufweist, das mit dem Sitzteil (3) über eine Führungsschiene in Eingriff steht.

7. Sitz nach einem der vorhergehenden Ansprüche, **dadurch gekennzeichnet, dass** mindestens eine Stelleinrichtung (6) zwischen Sitzlehne (2) und Sitzteil (3) angeordnet ist, wobei der erste Stellhebel (7) sich in Längsrichtung des Fahrzeugs und der zweite Stellhebel (8) sich in Querrichtung des Fahrzeugs bei der Sitzstellung (I) erstreckt.

## Claims

1. Vehicle seat, in particular rear seat (1) for a motor vehicle, which vehicle seat comprises a seat part (3) and a pivotable backrest (2), it being possible for the backrest (2) to be adjusted from an upright seat position (I) into a laid-down storage position (II) on the upper side of the seat part and at least one actuating device (6) being arranged between the backrest (2) and the seat part (3), which at least one actuating device (6) comprises a first actuating lever (7) which is connected to the backrest (2) and is connected in an articulated manner to a second actuating lever (8) which is in engagement with the seat part (3) via an adjusting device (9), the second actuating lever (8) comprising two lever arms (H1 and H2), being held in a stationary pivoting bearing (11) and having a sliding piece (14) of the adjusting device (9) at its one free end and a connecting joint (10) to the first actuating lever (7) at its turned-away free end, the seat part (3) having on its underside, as adjusting device (9), a guide gate or track (15) which extends in the transverse direction of the vehicle and in which the sliding piece (14) of the second actuating lever (8) of the adjusting device (9) is arranged such that it can be displaced in the transverse direction (P3), in such a way that the seat part (3) assumes an advanced position in the storage position (II), and the first actuating lever (7) being connected to the backrest (2) at a spacing (a) below a pivoting axis (A) with the backrest (2), in such a way that the first actuating lever (7) carries out a pulling movement counter to the driving direction (F) and the sliding piece (14) on the connected second actuating lever (8) carries out a pressing movement in the driving direction (F).

2. Vehicle seat according to one of the preceding claims, **characterized in that** the seat part (3) is arranged adjustably firstly by means of rollers or sliding pieces in stationary guide rails (17, 18) of the vehicle body and is connected in an articulated manner secondly via pivoting levers (21, 22) of a lowering device (20) such that it can be lowered or raised with respect to the vehicle body.

3. Vehicle seat according to one of the preceding claims, **characterized in that** the pivoting levers (21, 22) are connected to one another spaced apart via a transverse rod (23) and are connected in an articulated manner with one end in each case to the seat lower frame (24) such that they can be adjusted about a pivoting axis (B), and the turned-away free ends (25) of the pivoting levers (21, 22) are held on the seat part (3).

4. Vehicle seat according to Claim 1, **characterized in that** the backrest (2) can be pivoted via an unlocking movement about the pivoting axis (A) into the storage position (II) on the seat part (3) in the case of adjusting movements of the first and second actuating levers (7, 8) of the actuating device (6), it being possible for the seat part (3) to be displaced in the driving direction (F) via the second actuating lever (8) and to be adjusted into the lowered storage position (II) by means of the pivoting levers (21, 22).

5. Vehicle seat according to one of the preceding claims, **characterized in that** a spring element (26) which has a spring prestress counter to the storage position (II) of the seat part (3) is arranged on at least one pivoting lever (21, 22).

6. Vehicle seat according to one of the preceding claims, **characterized in that** the second actuating lever (8) of the adjusting device (6) has a driving element which is connected to the seat part (3) and is in engagement with the seat part (3) via a guide rail.

7. Seat according to one of the preceding claims, **characterized in that** at least one actuating device (6) is arranged between the backrest (2) and the seat part (3), the first actuating lever (7) extending in the longitudinal direction of the vehicle and the second actuating lever (8) extending in the transverse direction of the vehicle in the seat position (I).

## Revendications

1. Siège de véhicule, notamment siège arrière (1) pour un véhicule automobile, comprenant une partie de siège (3) et un dossier de siège (2) pivotable et le dossier de siège (2) étant réglable d'une position de siège (I) droite dans une position rangée (II) repliée sur le côté supérieur de la partie de siège et au moins un dispositif de réglage (6) étant disposé entre le dossier de siège (2) et la partie de siège (3), ledit dispositif de réglage comprenant un premier levier de réglage (7) relié au dossier de siège (2) et relié de façon articulée à un deuxième levier de réglage (8) s'emboîtant avec la partie de siège (3) via un dispositif de réglage (9) ;
le deuxième levier de réglage (8) comprenant deux bras de levier (H1 et H2), étant maintenu dans un palier de pivotement (11) fixe et comportant au niveau de sa première extrémité libre une pièce de coulissement (14) du dispositif de réglage (9) et au niveau de son extrémité libre opposée une articulation de jonction (10) pour le premier levier de réglage (7) ;
la partie de siège (3) comportant comme dispositif de réglage (9) côté inférieur une orbite ou un coulisseau de guidage (15) s'étendant dans la direction transversale du véhicule et dans lequel ou laquelle la pièce de coulissement (14) du deuxième levier de réglage (8) du dispositif de réglage (9) peut être disposée de façon coulissante dans la direction transversale (P3) de façon à ce que la partie de siège (3) prenne en position rangée (II) une position poussée en avant ; et
le premier levier de réglage (7) étant relié au dossier de siège (2) à une distance (a) du dossier de siège (2) se trouvant en dessous d'un axe de pivotement (A) de façon à ce que le premier levier de réglage (7) réalise un mouvement de traction contre la direction de déplacement du véhicule (F) et que la pièce de coulissement (14) située au niveau du deuxième levier de réglage (8) relié réalise un mouvement de pression dans la direction de déplacement du véhicule (F).

2. Siège de véhicule selon l'une quelconque des revendications précédentes, **caractérisé en ce que** la partie de siège (3) est disposée de façon réglable d'une part dans des rails de guidage (17, 18) fixes de la carrosserie du véhicule à l'aide de rouleaux ou de pièces de glissement et est articulée de façon soulevable ou abaissable par rapport à la carrosserie du véhicule via les leviers (21, 22) du dispositif d'abaissement (20).

3. Siège de véhicule selon l'une quelconque des revendications précédentes, **caractérisé en ce que** les leviers (21, 22) sont reliés entre eux à une certaine distance l'un de l'autre via une tige traversante (23) et articulés de façon réglable à une extrémité, respectivement au niveau du cadre inférieur du siège (24) autour d'un axe de pivotement (B) et **en ce que** les extrémités libres (25) opposées des leviers (21, 22) sont maintenues contre la partie de siège (3).

4. Siège de véhicule selon la revendication 1, **caractérisé en ce que** le dossier de siège (2) est relié de façon à pouvoir pivoter autour de l'axe de pivotement (A) sur la partie de siège (3) via une poignée de déverrouillage permettant d'effectuer des mouvements de réglage du premier et deuxième levier de réglage (7, 8) du dispositif de réglage (6) dans la position rangée (II), la partie de siège (3) pouvant être déplacée dans la direction de déplacement du véhicule (F) via le deuxième levier de réglage (8) et pouvant être réglée dans la position rangée rabaissée (II) à l'aide des leviers (21, 22).

5. Siège de véhicule selon l'une quelconque des revendications précédentes, **caractérisé en ce qu'**un élément de ressort (26) est disposé au niveau d'au moins un levier (21, 22), ledit élément comportant une précontrainte de ressort s'exerçant contre la position rangée (II) de la partie de siège (3).

6. Siège de véhicule selon l'une quelconque des revendications précédentes, **caractérisé en ce que** le deuxième levier de réglage (8) du dispositif de réglage (6) comporte un élément d'engrenage relié à la partie de siège (3) et s'engrenant avec la partie de siège (3) via un rail de guidage.

7. Siège selon l'une quelconque des revendications précédentes, **caractérisé en ce qu'**au moins un dispositif de réglage (6) est disposé entre le dossier de siège (2) et la partie de siège (3), le premier levier de réglage (7) s'étendant dans la direction longitudinale du véhicule et le deuxième levier de réglage (8) s'étendant dans la direction transversale du véhicule dans la position de siège (I).
